# EUROPÄISCHE PATENTSCHRIFT

(11) **EP 3 446 024 B1**
(45) Veröffentlichungstag und Bekanntmachung des Hinweises auf die Patenterteilung: **29.04.2020**
(21) Anmeldenummer: 17716878.8
(22) Anmeldetag: 11.04.2017
(51) Int. Cl.: F16T 1/38, F16T 1/48, H01R 33/88

(54) **BAUGRUPPE FÜR EINEN KONDENSATABLEITER ZUM ABLEITEN EINES DRUCKGASKONDENSATS**
ASSEMBLY FOR A CONDENSATE EXTRACTOR FOR EXTRACTING A COMPRESSED GAS CONDENSATE
MODULE DESTINÉ À UN DISPOSITIF D'ÉVACUATION DE CONDENSAT POUR ÉVACUER UN CONDENSAT DE GAZ SOUS PRESSION

(30) Priorität: 22.04.2016 DE 102016107500
(43) Veröffentlichungstag der Anmeldung: 27.02.2019
(73) Patentinhaber: Beko Technologies GmbH, 41468 Neuss (DE)
(72) Erfinder: ROTTER, Karsten, 41352 Korschenbroich (DE); SINSTEDTEN, Johannes, 41352 Korschenbroich (DE)
(74) Vertreter: Patentanwälte Bauer Vorberg Kayser
(86) Internationale Anmeldenummer: PCT/EP2017/058608
(87) Internationale Veröffentlichungsnummer: WO 2017/182320

(56) Entgegenhaltungen:
- CN-A- 103 453 506
- CN-Y- 201 129 711
- DE-A1-102005 028 632
- JP-A- 2015 096 701
- US-A- 3 120 325
- US-A1- 2014 130 898
- US-A1- 2015 323 132

## Beschreibung

Die Erfindung betrifft eine Baugruppe für einen Kondensatableiter zum Ableiten eines Druckgaskondensats mit den Merkmalen des Oberbegriffs von Anspruch 1 sowie einen Kondensatableiter zum Ableiten eines Druckgaskondensats mit den Merkmalen des Oberbegriffs von Anspruch 13.

In Druckgassystemen und insbesondere Druckluftsystemen fällt regelmäßig Kondensat an, welches neben Wasser auch Öl oder andere Verschmutzungen enthalten kann. Das Öl entsteht hauptsächlich in Kompressoren, in welches es als Schmiermittel verwendet wird. Das Kondensat in Druckgassystemen ist regelmäßig sehr aggressiv und daher für das Druckgassystem schädlich, weswegen es regelmäßig gesammelt und aus dem an sich geschlossenen Druckgassystem abgelassen werden muss. Dabei soll bei dem Ablassen oder Ableiten des Druckgaskondensats ein Gasdruckverlust nach Möglichkeit vermieden oder minimiert werden. Diese Aufgabe übernehmen gattungsgemäße Kondensatableiter.

Kondensatableiter weisen als regelmäßig vorhandende Bestandteile eine Sammelkammer zur Aufnahme des Druckgaskondensats, ein Auslassventil zur Abgabe des Druckgaskondensats sowie einen Sensor zum Erfassen eines Füllstands der Sammelkammer auf. Zu ihrem Betrieb sind solche Kondensatableiter regelmäßig mit einer externen Spannungsquelle verbunden, welche dem Kondensatableiter z. B. eine übliche Wechselspannung von 230 V bereitstellt. Diese Kondensatableiter müssen regelmäßig gewartet werden, da ihre Funktion mit zunehmender Betriebszeit durch Verschleiß und Verschmutzung beeinträchtigt wird. Dieser Verschleiß betrifft aber im Wesentlichen nur die mechanischen Komponenten des Kondensatableiters, wohingegen die elektrischen Komponenten des Kondensatableiters nicht einer solch häufigen Wartung bedürfen.

Die DE 10 2005 028 632 A1, von welcher die vorliegende Erfindung ausgeht, beschreibt einen gattungsgemäßen Kondensatableiter, welcher sich in zwei Baugruppen aufgeteilt. Dabei sind die wesentlichen Verschleißteile in einer als Wartungsbaugruppe bezeichneten Baugruppe der beiden Baugruppen angeordnet, zu welchen Verschleißteilen vor allem die Sammelkammer selbst sowie das Auslassventil zählen. Hingegen finden sich die elektrischen Vorrichtungen und insbesondere der externe elektrische Anschluss in der anderen Baugruppe, welche auch als Elektronikbaugruppe bezeichnet werden kann. Dieser Kondensatableiter ermöglicht es, die Wartungsbaugruppe und damit die in ihr befindlichen Verschleißteile auszutauschen, ohne dass die Elektronikbaugruppe weiter demontiert oder überhaupt von der externen elektrischen Spannungsquelle getrennt werden muss. Eine frische Wartungsbaugruppe mit unverschlissenen Komponenten kann dann einfach wieder an der entsprechenden Schnittstelle der Elektronikbaugruppe befestigt werden, welche Elektronikbaugruppe für diesen Vorgang nicht weiter verändert werden muss. Nachfolgend wird der Einfachheit halber die Wartungsbaugruppe stets einfach nur als Baugruppe bezeichnet. Da sowohl ein Abkoppeln von der externen elektrischen Spannungsquelle als auch ein neuerliches Anschließen an die externe elektrische Spannungsquelle durch besonders ausgebildetes Personal durchgeführt werden muss, wird durch die Entbehrlichkeit dieses Abkoppelns und Anschließens der Aufwand für die Wartung bei diesem Kondensatableiter erheblich vermindert.

Bei einem Druckgassystem kommt regelmäßig eine Vielzahl von an unterschiedlichen Stellen des Druckgassystems angeordneten Kondensatableitern zum Einsatz. Dabei sind die Betriebsanforderungen an den jeweiligen Kondensatableiter unterschiedlich, etwa je nach prozesstechnischer Position im Druckgassystem, was auch unterschiedliche Parametrierungen oder sonstige Einstellungen des Kondensatableiters erforderlich macht. So fällt im Bereich des Abscheiders des Nachkühlers an einem Druckluftkompressor regelmäßig deutlich mehr Druckgaskondensat an als am Druckluftkessel oder aber in Druckluftfiltern, wobei in den Druckluftfiltern wiederum mit einem höheren Anteil an Öl zu rechnen ist. Diese Unterschiede sind auch für die Parametrierung oder Auslegung der oben beschriebenen Wartungsbaugruppe bedeutsam.

Nachteilig an dem oben beschriebenen Kondensatableiter ist daher, dass bei einem bestimmten Kondensatableiter eine Wartungsbaugruppe an einer Elektronikbaugruppe befestigt werden könnte, welche Wartungsbaugruppe hinsichtlich ihrer Auslegung oder Parametrierung nicht für diesen Kondensatableiter bzw. für die prozesstechnische Position des Kondensatableiters im Druckgassystem geeignet ist.

Ausgehend von diesem Stand der Technik besteht die Aufgabe der Erfindung also darin, die Fehleranfälligkeit bei der Wartung von Kondensatableitern zu vermindern.

Bezogen auf eine Baugruppe für einen Kondensatableiter zum Ableiten eines Druckgaskondensats mit den Merkmalen des Oberbegriffs von Anspruch 1 wird die Aufgabe durch die Merkmale des kennzeichnenden Teils von Anspruch 1 gelöst. Bezogen auf einen Kondensatableiter zum Ableiten eines Druckgaskondensats mit den Merkmalen des Oberbegriffs von Anspruch 13 wird die Aufgabe durch die Merkmale des kennzeichnenden Teils von Anspruch 13 gelöst.

Wesentlich für die Erfindung ist die Erkenntnis, dass die Baugruppe dadurch kodiert werden kann, dass sie in eine von mehreren möglichen Konfigurationen gebracht werden kann. Indem nun die einzelnen Konfigurationsmöglichkeiten der Baugruppe jeweils einer Parametrierung und/oder Auslegung zugeordnet werden, besteht die Möglichkeit, anhand der jeweiligen aktuellen Konfiguration der Baugruppe sicherzustellen, dass die Parametrierung und/oder Auslegung der Baugruppe zu derjenigen Elektronikbaugruppe, an der sie befestigt werden soll und zu der prozesstechnischen Position des entsprechenden Kondensatableiters passt.

Die erfindungsgemäße Baugruppe ist für einen Kondensatableiter, welcher Kondensatableiter zum Ableiten eines Druckgaskondensats eingerichtet ist. Die erfindungsgemäße Baugruppe weist eine Sammelkammer zur Aufnahme des in einem Druckgassystem angefallenen Druckgaskondensats, ein elektrisch betriebenes Auslassventil zur Abgabe des Druckgaskondensats aus der Sammelkammer sowie eine Schnittstelle zur Befestigung der Baugruppe an einer Elektronikbaugruppe auf. Dabei weist die Schnittstelle eine Kontaktanordnung zur elektrischen Versorgung des Auslassventils von der Elektronikbaugruppe auf. Mit anderen Worten wird das Auslassventil elektrisch von der Elektronikbaugruppe versorgt, welche Versorgung über die Schnittstelle erfolgt. Insbesondere kann es sich bei dem Auslassventil um ein elektrisch schaltbares Magnetventil handeln. Vorzugsweise kann die Kontaktanordnung zum elektrischen Schalten des Auslassventils eingerichtet sein, sodass also das Auslassventil Schaltimpulse durch die Kontaktanordnung empfängt.

Die erfindungsgemäße Baugruppe ist dadurch gekennzeichnet, dass die Schnittstelle in einen von mehreren möglichen und unterschiedlichen Konfigurationszuständen gebracht werden kann. Mit anderen Worten gibt es mehrere verschiedene Konfigurationszustände, welche die Schnittstelle annehmen kann. Konkret befindet sich die Schnittstelle dann in einem speziellen Konfigurationszustand der mehreren Konfigurationszustände. Das ermöglicht es der Elektronikbaugruppe, die Parametrierung und/oder Auslegung der Baugruppe anhand des Konfigurationszustandes, welcher diese Parametrierung und/oder Auslegung kodieren kann, zu überprüfen.

Eine bevorzugte Ausgestaltung der erfindungsgemäßen Baugruppe ist dadurch gekennzeichnet, dass zumindest einige der möglichen Konfigurationszustände einem jeweiligen mechanischen Konfigurationszustand entsprechen. Folglich unterscheiden sich die Konfigurationszustände jedenfalls auf eine mechanische Art und Weise, wozu insbesondere jeder Unterschied in der Geometrie der Schnittstelle zählt. Es können auch alle möglichen Konfigurationszustände einem jeweiligen mechanischen Konfigurationszustand entsprechen.

Es ist weiter bevorzugt, dass die Schnittstelle eine Vielzahl von beabstandeten Konfigurationspositionen aufweist, welche jeweils in eine von mehreren mechanischen Konfigurationsvarianten ausgeprägt sein können und dass jede unterschiedliche Konfigurationsvariante einer Konfigurationsposition einem unterschiedlichen Konfigurationszustand entspricht. Die Konfigurationspositionen entsprechen also speziellen geometrischen Positionen oder Bereichen der Schnittstelle, welche jeweils unterschiedlich mechanisch ausgeprägt werden können.

Eine weitere bevorzugte Ausführungsform der erfindungsgemäßen Baugruppe ist dadurch gekennzeichnet, dass an zumindest einigen Konfigurationspositionen wahlweise ein jeweiliges Konfigurationselement angeordnet werden kann, wobei das Vorhandensein eines Konfigurationselements an der jeweiligen Konfigurationsposition einer ersten Konfigurationsvariante der Konfigurationsposition und das Fehlen eines Konfigurationselements an der jeweiligen Konfigurationsposition einer zweiten Konfigurationsvariante der Konfigurationsposition entspricht. Vorzugsweise kann an allen Konfigurationspositionen wahlweise ein jeweiliges Konfigurationselement angeordnet werden. Solche Konfigurationselemente sind also mechanische Komponenten, welche an einer jeweiligen Konfigurationsposition entweder vorhanden sein oder fehlen können. Es liegt auf der Hand, dass allein schon durch ihr Vorhandensein oder Fehlen ein mechanischer Unterschied zwischen beiden Fällen vorliegt. Bei den Konfigurationspositionen handelt es sich vorzugsweise um Aufnahmen für die Anordnung eines jeweiligen Konfigurationselements. Hier ist es bevorzugt, dass das jeweilige Konfigurationselement kraftschlüssig und/oder formschlüssig an der jeweiligen Konfigurationsposition angeordnet und vorzugsweise befestigt werden kann.

Gemäß einer bevorzugten Ausführungsform der erfindungsgemäßen Baugruppe ist vorgesehen, dass jeder Konfigurationszustand einem unterschiedlichen Oberflächenprofil der Schnittstelle bei der Befestigung der Baugruppe an der Elektronikbaugruppe entspricht. Mit Oberflächenprofil ist hier derjenige Teil der Schnittstelle der Baugruppe gemeint, welcher von der Elektronikbaugruppe bei der Befestigung der Baugruppe an der Elektronikbaugruppe gesehen wird. Insbesondere geht es also um eine Flächenkontur einer Oberfläche der Schnittstelle. Nicht zum Oberflächenprofil der Schnittstelle gehören insbesondere mechanische Unterschiede, welche hinter anderen Oberflächen oder sonstigen Strukturen versteckt sind und in diesem Sinne innerhalb der Baugruppe liegen. Die Entsprechung der Konfigurationszustände mit Oberflächenprofilen erlaubt es, überhaupt die mechanische Möglichkeit der Befestigung der Baugruppe an der Elektronikbaugruppe von einer Übereinstimmung der Kodierung bzw. Konfiguration abhängig zu machen und zwar speziell dann, wenn auch die Elektronikbaugruppe durch die Konfiguration ihres Oberflächenprofils kodiert ist.

Eine bevorzugte Ausführungsform der erfindungsgemäßen Baugruppe ist dadurch gekennzeichnet, dass an zumindest einigen Konfigurationspositionen ein jeweiliges Konfigurationselement in mehreren verschiedenen Anordnungsvarianten angeordnet werden kann, wobei jede Anordnungsvariante des Konfigurationselements an der jeweiligen Konfigurationsposition einer unterschiedlichen Konfigurationsvariante der Konfigurationsposition entspricht. Die unterschiedlichen Anordnungsvarianten entsprechen dabei vorzugsweise wiederum unterschiedlichen mechanischen Konfigurationen. Vorzugsweise handelt es sich bei diesen Konfigurationselementen um die obigen Konfigurationselemente. Daher kann es auch sein, dass neben der Frage des Vorhandenseins oder Fehlens des Konfigurationselements diese auch auf unterschiedliche Weise an der jeweiligen Konfigurationsposition angeordnet sein können - entsprechend den Anordnungsvarianten - sodass die Vielfalt der Konfigurationszustände entsprechend größer ist.

Eine weitere bevorzugte Ausführungsform der erfindungsgemäßen Baugruppe ist dadurch gekennzeichnet, dass das jeweilige Konfigurationselement an der jeweiligen Konfigurationsposition in einer ersten und einer zweiten Anordnungsvariante angeordnet sein kann, wobei das jeweilige Konfigurationselement in der ersten Anordnungsvariante gegenüber der zweiten Anordnungsvariante in Richtung der Elektronikbaugruppe versetzt angeordnet ist. Insbesondere ist diese Richtungsangabe der Versetzung bezogen auf die Befestigung der Baugruppe an der Elektronikbaugruppe zu verstehen, also auf eine relative Anordnung der Baugruppe zu der Elektronikbaugruppe, wie sie für das Herbeiführen der Befestigung der Baugruppe an der Elektronikbaugruppe erforderlich ist. Durch einen solchen Versatz in Richtung der Elektronikbaugruppe - entsprechend also dem Grad eines Herausragens in Richtung der Elektronikbaugruppe - ist also ein Unterschied in dem Oberflächenprofil der Schnittstelle gegeben, welcher auf einfache Weise eine mechanische Befestigbarkeit der Baugruppe an der Elektronikbaugruppe erlauben oder verhindern kann, und zwar in der Art eines Schlosses zu einem passenden Schlüssel. Dabei ist das Fehlen eines Konfigurationselements an der Konfigurationsposition auch als eine Anordnungsvariante im vorliegenden Sinne zu verstehen.

Gemäß einer bevorzugten Ausführungsform der erfindungsgemäßen Baugruppe ist vorgesehen, dass zumindest einige der möglichen Konfigurationszustände einem jeweiligen elektrischen Konfigurationszustand entsprechen und dass die Schnittstelle einen Abfragekontakt zum Abfragen des elektrischen Konfigurationszustands der Schnittstelle aufweist. Alternativ oder zusätzlich zu der oben beschriebenen mechanischen Konfiguration können also auch mehrere Konfigurationszustände vorgesehen sein, welche sich auch oder nur elektrisch unterscheiden. Ein solcher elektrischer Konfigurationszustand kann einerseits durch eine unmittelbar an einem oder mehreren Kontakten messbare Größe wie etwa eine Spannung oder eine Impedanz gegeben sein. Der elektrische Konfigurationszustand kann aber auch durch einen digital auslesbaren Datensatz gegeben sein, welcher ggf. erst nach Ausführung eines Handshake o.dgl. gemäß einem Kommunikationsprotokoll empfangen wird. Der obige Abfragekontakt stellt dabei ganz allgemein eine Möglichkeit dar, mittels einer elektrischen Kontaktierung und ggf. Messung diesen elektrischen Konfigurationszustand abzufragen. Es können auch alle möglichen Konfigurationszustände einem jeweiligen elektrischen Konfigurationszustand entsprechen.

Eine bevorzugte Ausführungsform der erfindungsgemäßen Baugruppe ist dadurch gekennzeichnet, dass die Schnittstelle eine Vielzahl von Kontaktpositionen zur Anordnung von elektrischen Kontaktelementen aufweist und dass unterschiedliche Anordnungen der elektrischen Kontaktelemente auf den Kontaktpositionen unterschiedlichen Konfigurationszuständen entsprechen. Hier ist weiter bevorzugt, dass der Abfragekontakt zur elektrischen Verbindung mit den Kontaktelementen eingerichtet ist. Speziell kann vorgesehen sein, dass die elektrischen Kontaktelemente den Abfragekontakt bilden.

Eine weitere bevorzugte Ausführungsform der erfindungsgemäßen Baugruppe ist dadurch gekennzeichnet, dass die Kontaktelemente elektrisch leitfähige Stifte sind, dass die Kontaktpositionen Öffnungen zur wahlweisen Aufnahme der Stifte aufweisen und dass die Baugruppe zu jeder Kontaktposition einen Pol aufweist, welcher Pol so angeordnet ist, dass bei Aufnahme eines Stiftes durch eine Öffnung einer Kontaktposition der aufgenommene Stift in elektrischer Verbindung mit dem Pol der Kontaktposition steht. Bei den Stiften kann es sich auch um Kontaktfedern handeln.

Gemäß einer bevorzugten Ausführungsform der erfindungsgemäßen Baugruppe ist vorgesehen, dass die Kontaktanordnung zwei Polkontakte für die elektrische Versorgung des Auslassventils aufweist, dass das Auslassventil zum Betrieb durch eine Kleinspannung und die Polkontakte zum Anschluss an die Kleinspannung eingerichtet sind. Bei einer solchen Kleinspannung handelt es sich um eine Spannung, welche innerhalb der Grenzwerte für den Spannungsbereich I nach IEC 60449 bleibt und also um einen Teilbereich der Niederspannung. Vorzugsweise beträgt die Kleinspannung höchstens 120 V, und zwar insbesondere für den Fall, dass es sich bei der Kleinspannung um eine Gleichspannung handelt. Es kann auch sein, dass die Kleinspannung höchstens 50 V beträgt, was insbesondere für den Fall gilt, dass es sich bei der Kleinspannung um eine Wechselspannung handelt. Indem über die Schnittstelle nur eine Kleinspannung - anstelle der regelmäßig höheren externen Versorgungsspannung der Elektronikbaugruppe - für den Betrieb des Auslassventils übertragen wird, ist eine Handhabung der Schnittstelle speziell beim Befestigen der Baugruppe an der Elektronikbaugruppe oder beim Ablösen der Baugruppe von der Elektronikbaugruppe elektrisch unbedenklich und lässt sich daher auch von einer Person ausführen, welche nicht speziell für den Umgang mit höheren Spannungen geschult ist.

Eine bevorzugte Ausführungsform der erfindungsgemäßen Baugruppe ist dadurch gekennzeichnet, dass die Baugruppe einen insbesondere kapazitiven Sensor zum Erfassen eines Füllstands der Sammelkammer aufweist und dass die Kontaktanordnung einen elektrischen Sensorkontakt zum Betrieb des Sensors aufweist. Hier ist es weiter bevorzugt, dass der Sensor zum Betrieb mit einem Massepotenzial eingerichtet ist und der Sensorkontakt zum Anschluss an das Massepotenzial eingerichtet ist.

Eine weitere bevorzugte Ausführungsform der erfindungsgemäßen Baugruppe ist dadurch gekennzeichnet, dass die Baugruppe eine Dichtungsanordnung zum Abdichten der Schnittstelle bei Befestigung der Baugruppe an der Elektronikbaugruppe aufweist.

Gemäß einer bevorzugten Ausführungsform der erfindungsgemäßen Baugruppe ist vorgesehen, dass die Schnittstelle eine Aufnahme für ein Befestigungsmittel aufweist, sodass durch das Befestigungsmittel eine kraftschlüssige Verbindung, vorzugsweise eine kraft- und formschlüssige Verbindung, zur Befestigung der Baugruppe an der Elektronikbaugruppe hergestellt werden kann und dass die Aufnahme in einen von mehreren möglichen mechanischen Konfigurationszuständen gebracht werden kann. Bevorzugt kann die Aufnahme durch Anordnung eines Konfigurationselements in einen von mehreren möglichen mechanischen Konfigurationszuständen gebracht werden. Es kann sich bei dem Befestigungsmittel insbesondere um eine Schraube handeln, wobei die Aufnahme vorzugsweise ein Innengewinde für die Schraube aufweist. Bei dieser Variante kommt also der für die Befestigung der Baugruppe vorgesehenen Aufnahme eine Doppelfunktion zu.

Ein erfindungsgemäßer Kondensatableiter dient zum Ableiten eines Druckgaskondensats und weist eine Elektronikbaugruppe auf, welche Elektronikbaugruppe eine Versorgungsanordnung zur Erzeugung einer Versorgungsspannung, eine Modulschnittstelle zur Befestigung einer Baugruppe an der Elektronikbaugruppe und zur Bereitstellung der Versorgungsspannung an der Baugruppe und einen Versorgungsanschluss zur Verbindung der Versorgungsanordnung mit einer externen Spannungsquelle aufweist. Folglich ist die Modulschnittstelle dazu eingerichtet, dass durch sie die Baugruppe an der Elektronikbaugruppe befestigt wird und dass die Versorgungsspannung an der Baugruppe bereitgestellt wird.

Der erfindungsgemäße Kondensatableiter ist dadurch gekennzeichnet, dass der Kondensatableiter eine erfindungsgemäße Baugruppe zur Befestigung an der Elektronikbaugruppe aufweist. Es kann auch sein, dass diese erfindungsgemäße Baugruppe an der Elektronikbaugruppe befestigt ist.

Eine bevorzugte Ausführungsform des erfindungsgemäßen Kondensatableiters ist dadurch gekennzeichnet, dass die Modulschnittstelle in eine von mehreren möglichen mechanischen Konfigurationen gebracht werden kann und dass bei zumindest einigen mechanischen Konfigurationen der Modulschnittstelle und einigen der möglichen Konfigurationszustände der Schnittstelle eine Befestigung der Baugruppe an der Elektronikbaugruppe mechanisch blockiert wird. Bei diesen einigen der möglichen Konfigurationszustände der Schnittstelle kann es sich insbesondere um einige Anordnungsvarianten der Konfigurationselemente handeln. Diese Anordnungsvarianten der Konfigurationselemente wurden bereits obenstehend beschrieben.

Gemäß einer bevorzugten Ausführungsform des erfindungsgemäßen Kondensatableiters ist vorgesehen, dass die Elektronikbaugruppe eine Vielzahl von beabstandeten Gegen-Konfigurationspositionen aufweist, welche jeweils einer Konfigurationsposition der Baugruppe entsprechen, dass an den Gegen-Konfigurationspositionen wahlweise ein jeweiliges Gegen-Konfigurationselement angeordnet werden, vorzugsweise, dass die Gegen-Konfigurationselemente den Konfigurationselementen entsprechen, und dass im Falle der Anordnung eines Gegen-Konfigurationselements in einer Gegen-Konfigurationsposition und eines Konfigurationselements in derjenigen Konfigurationsposition, welche der Gegen-Konfigurationsposition entspricht, eine Befestigung der Baugruppe an der Elektronikbaugruppe mechanisch blockiert wird. Vorzugsweise sind die Gegen-Konfigurationspositionen Aufnahmen für die Anordnung eines jeweiligen Gegen-Konfigurationselements. Insbesondere wird das jeweilige Gegen-Konfigurationselemente durch eine kraft- und/oder formschlüssige Verbindung an der jeweiligen Gegen-Konfigurationspositionen angeordnet und vorzugsweise befestigt. Hier ist es weiter bevorzugt, dass die Gegen-Konfigurationspositionen so an der Modulschnittstelle angeordnet sind, dass bei einer Befestigung der Baugruppe an der Elektronikbaugruppe die Gegen-Konfigurationspositionen an den jeweils entsprechenden Konfigurationspositionen angrenzen.

Für allem für den Fall, dass es sich bei den obigen Konfigurationspositionen der Baugruppe um Aufnahmen für die Anordnung des jeweiligen Konfigurationselements und bei den Gegen-Konfigurationspositionen um Aufnahmen für die Anordnung eines jeweiligen Gegen-Konfigurationselements handelt, kann es sein, dass bei Anordnung eines Konfigurationselements in einer Konfigurationsposition und Befestigung der Baugruppe an der Elektronikbaugruppe dieses Konfigurationselement in diejenige Gegen-Konfigurationsposition hineinragt, welche der Konfigurationsposition entspricht und vorzugsweise an sie angrenzt. Alternativ oder zusätzlich kann es sein, dass bei Anordnung eines Gegen-Konfigurationselements in einer Gegen-Konfigurationsposition und Befestigung der Baugruppe an der Elektronikbaugruppe dieses Gegen-Konfigurationselement in diejenige Konfigurationsposition hineinragt, der diese Gegen-Konfigurationsposition entspricht. Auf diese Weise kann die oben genannte mechanische Blockierung auf einfache Weise verwirklicht werden.

Eine weitere bevorzugte Ausführungsform des erfindungsgemäßen Kondensatableiters ist dadurch gekennzeichnet, dass die Elektronikbaugruppe eine Logikvorrichtung zum Erfassen und Überprüfen eines Konfigurationszustands der Schnittstelle aufweist, welche Logikvorrichtung in eine von mehreren möglichen elektrischen Konfigurationen gebracht werden kann, und dass die Logikvorrichtung bei einer fehlenden Übereinstimmung zwischen dem Konfigurationszustand der Schnittstelle und der elektrischen Konfiguration der Logikvorrichtung eine Fehlerroutine zur Außerbetriebnahme der Baugruppe ausführt. Eine solche Fehlerroutine kann gemäß einer ersten bevorzugten Variante die Ausgabe eines - insbesondere optischen und/oder akustischen - Warnsignals zur Anzeige einer Fehlkonfiguration der Baugruppe bezogen auf die Elektronikbaugruppe umfassen. Gemäß einer zweiten bevorzugten Variante kann die Fehlerroutine die Außerbetriebnahme der Baugruppe durch die Versorgungsanordnung umfassen. Indem also die Versorgungsanordnung keine Versorgungsspannung bereitstellt, nimmt die Baugruppe gar nicht erst ihre Funktion auf. Bevorzugt ist weiter, dass die Logikvorrichtung einen nichtflüchtigen Speicher zum Abspeichern der elektrischen Konfiguration aufweist. Möglich ist aber auch, dass die Logikvorrichtung durch die Anordnung von Verschaltungselementen gemäß unterschiedlicher möglicher Verschaltungsanordnungen in die Konfiguration der mehreren möglichen elektrischen Konfigurationen gebracht wird.

Weitere bevorzugte Merkmale, Details und Ausgestaltungen des erfindungsgemäßen Kondensatableiters ergeben sich aus den entsprechenden Merkmalen, Details und Ausgestaltungen der erfindungsgemäßen Baugruppe.

In der Zeichnung zeigt
- Fig. 1: eine Explosionsansicht eines erfindungsgemäßen Kondensatableiters gemäß einem ersten Ausführungsbeispiel,
- Fig. 2: eine erste Schnittansicht des erfindungsgemäßen Kondensatableiters der Fig. 1,
- Fig. 3: eine zweite Schnittansicht des erfindungsgemäßen Kondensatableiters der Fig. 1 und
- Fig. 4: eine Explosionsansicht eines erfindungsgemäßen Kondensatableiters gemäß einem zweiten Ausführungsbeispiel.

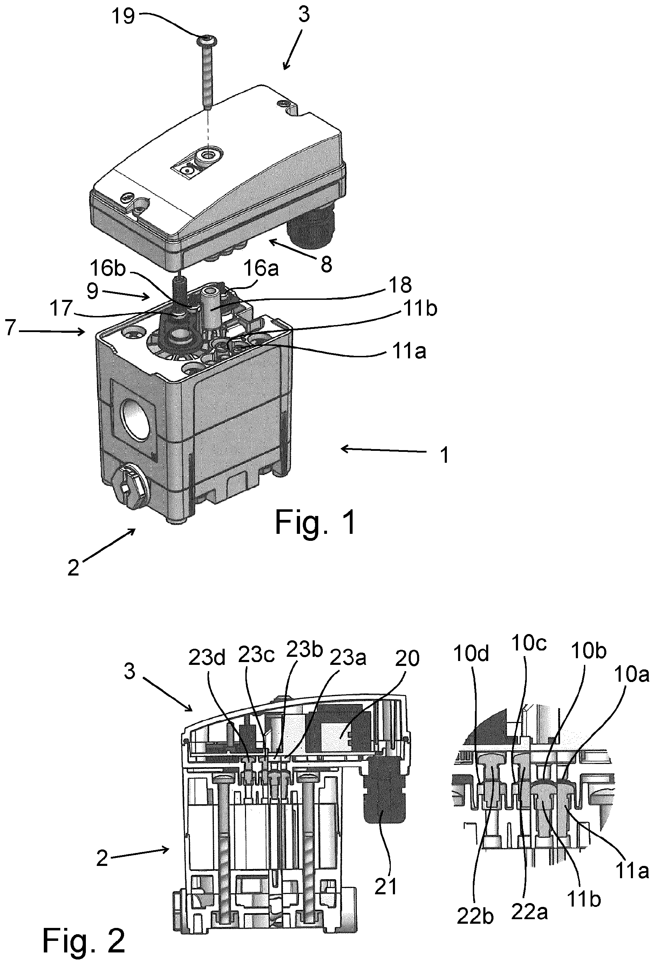

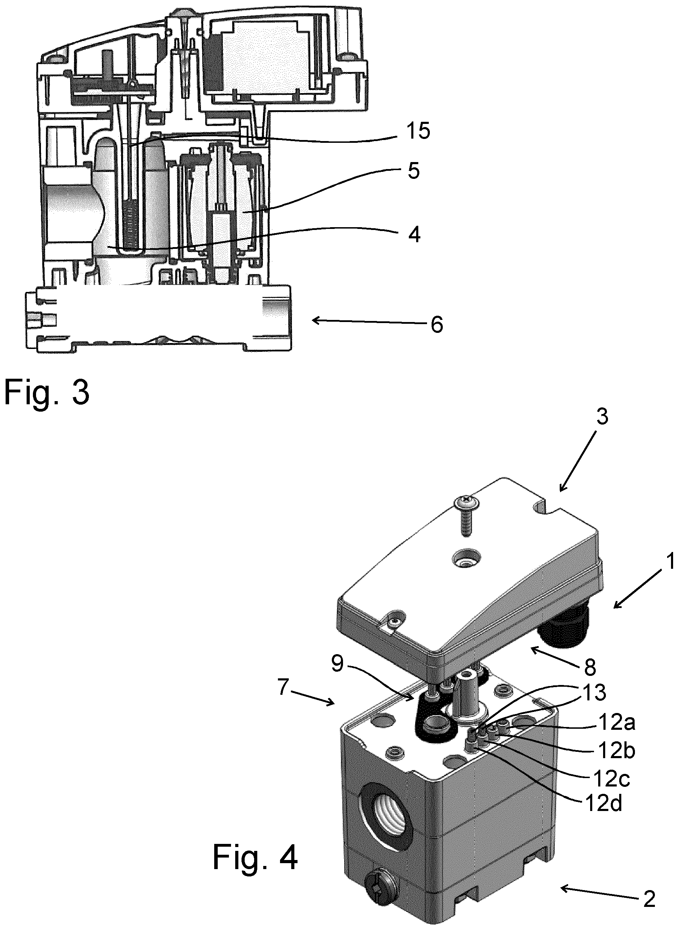

Der in der Fig. 1 dargestellte Kondensatableiter 1, welcher einem ersten Ausführungsbeispiel des erfindungsgemäßen Kondensatableiters 1 entspricht, weist als wesentliche Bestandteile eine Baugruppe 2 und eine Elektronikbaugruppe 3 auf. Diese Baugruppe 2 stellt entsprechend ein erstes Ausführungsbeispiel der erfindungsgemäßen Baugruppe 2 dar. Die Baugruppe 2 lässt sich auch als Wartungsbaugruppe bezeichnen. Der Kondensatableiter 1 dient dem Einsatz in einem hier nicht gezeigten Druckgassystem und dort speziell dem Ableiten eines Druckgaskondensats. In der Fig. 1 sind die Baugruppe 2 und die Elektronikbaugruppe 3 voneinander getrennt dargestellt. In den Fig. 2 und 3 ist der Kondensatableiter 1 der Fig. 1 mit Befestigung der Baugruppe 2 an der Elektronikbaugruppe 3 in einer jeweiligen Schnittansicht dargestellt. Regelmäßig ist der Kondensatableiter 1 insgesamt an der Elektronikbaugruppe 3 mit dem übrigen Druckgassystem mechanisch befestigt.

Die Baugruppe 2 weist eine Sammelkammer 4 zur Aufnahme des in dem Druckgassystem angefallenen Druckgaskondensats und ein elektrisch betriebenes Auslassventil 5 - bei welchem es sich um ein Magnetventil handelt - zur Abgabe des Druckgaskondensats auf. Das abgegebene Druckgaskondensat kann durch die Auslassöffnung 6 der Baugruppe 2 austreten. Die sich auf die Funktionsweise des Auslassventils 5, der Sammelkammer 4 und der Auslassöffnung 6 miteinander beziehenden Einzelheiten - auf die es vorliegend nicht ankommt und die an sich aus dem Stand der Technik bekannt sind - sind in der Darstellung der Fig. 3 ausgeblendet.

Die Baugruppe 2 ist durch die Schnittstelle 7 an der Elektronikbaugruppe 3 und speziell an deren Modulschnittstelle 8 befestigt. Die Modulschnittstelle 8 wird vorliegend einfach durch das Gegenstück zu der Modulschnittstelle 7 an der Elektronikbaugruppe 3 gebildet. Die Schnittstelle 7 weist eine Kontaktanordnung 9 auf, durch welche Elektrizität zur elektrischen Versorgung des Auslassventils 5 von der Elektronikbaugruppe 3 empfangen werden kann.

Die Schnittstelle 7 lässt sich in verschiedene mechanische Konfigurationszustände bringen. Dazu weist sie mehrere und speziell vier Konfigurationspositionen 10a-d auf, welche hier speziell durch vier nebeneinander angeordnete Öffnungen gebildet sind. In diese Öffnungen kann nun jeweils eine Schraube wahlweise angeordnet werden. So sind gemäß den Darstellungen der Fig.1 und 2 solche Schrauben in den Öffnungen der beiden Konfigurationspositionen 10a, b angeordnet. Speziell sind die Schrauben durch eine Schraubverbindung, also durch eine kraft- und formschlüssige Verbindung, an den Konfigurationspositionen 10a, b angeordnet und befestigt. Diese Schrauben bilden Konfigurationselemente 11a, b, durch deren unterschiedliche Möglichkeiten der Anordnung bzw. Platzierung an den Konfigurationspositionen 10a-d - also den Fall einer vorhandenen Schraube an der jeweiligen Konfigurationsposition 10a-d gegenüber dem Fall einer fehlenden Schraube an der jeweiligen Konfigurationsposition 10a-d - insgesamt sechzehn verschiedene Konfigurationsvarianten und damit mechanische Konfigurationszustände der Baugruppe 2 verwirklicht werden können. Jeder dieser Konfigurationszustände ergibt dann erkennbar ein jeweils unterschiedliches Oberflächenprofil der Schnittstelle 7.

Es wäre auch denkbar, dass die Konfigurationselemente 11a, b und hier speziell die Schrauben auf mehr als eine Weise - z. B. unterschiedlich weit herausragend - an den jeweiligen Konfigurationspositionen 10a-d angeordnet werden können. In so einem Falle würde sich die Anzahl der unterschiedlichen Konfigurationszustände mit jeweils unterschiedlichem Oberflächenprofil weiter erhöhen.

Die Fig. 4 zeigt ein zweites Ausführungsbeispiel eines erfindungsgemäßen Kondensatableiters 1, welcher Kondensatableiter 1 wiederum ein zweites Ausführungsbeispiel einer erfindungsgemäßen Baugruppe 2 aufweist.

Im Unterschied zu dem ersten Ausführungsbeispiel der Fig. 1 bis 3, weisen die Konfigurationszustände der Schnittstelle 7 der Baugruppe 2 des zweiten Ausführungsbeispiels der Fig. 3 neben den mechanischen Unterschieden auch elektrische Unterschiede auf. Speziell weist die Schnittstelle 7 der Baugruppe 2 des zweiten Ausführungsbeispiels vier Kontaktpositionen 12a-d auf, welche aus Öffnungen bestehen, von denen elektrische Kontaktelemente 13 - hier speziell elektrisch leitfähige Stifte - aufgenommen werden können. Unter den Kontaktpositionen 12a-d ist jeweils ein hier nicht dargestellter Pol der Baugruppe angeordnet, sodass ein Stift an einer Kontaktposition 12a-d mit dem darunterliegenden Pol in elektrischer Verbindung steht.

Auf diese Weise bilden die Kontaktelemente 13 insgesamt, welche vorliegend an den Kontaktpositionen 12c, d angeordnet sind, selbst einen Abfragekontakt 14 der Schnittstelle 7, über welchen elektrisch der Konfigurationszustand der Schnittstelle 7 ermittelt werden kann. Die Kontaktelemente 13 hätte beispielsweise alternativ auch in den Kontaktpositionen 12a, c oder den Kontaktpositionen 12a, b angeordnet werden können. Es hätten auch insgesamt vier Kontaktelemente 13 in den Kontaktpositionen 12a-d angeordnet werden können. Durch entsprechende, hier nicht dargestellte Kontakte der Modulschnittstelle 8 können die Kontaktelemente 13 bzw. die durch sie hergestellten elektrischen Verbindungen erfasst und der jeweilige Konfigurationszustand damit bestimmt werden. Hinsichtlich seiner sonstigen Eigenschaften und Merkmale entspricht das zweite Ausführungsbeispiel der Fig. 4 dem ersten Ausführungsbeispiel der Fig. 1 bis 3.

Wiederum bei beiden dargestellten Ausführungsbeispielen weist die Kontaktanordnung 9 der Schnittstelle 7 weist Polkontakte 16a,b für die elektrische Versorgung des Auslassventils 5 auf. Diese Polkontakte 16a,b nehmen eine von der Elektronikbaugruppe 3 bereitgestellte Kleinspannung von 100 Volt zum Betrieb des Auslassventils 5 auf.

Daneben weist die Kontaktanordnung 9 der Schnittstelle 7 einen Sensorkontakt 17 auf, welcher durch die Elektronikbaugruppe 3 elektrisch an ein Massepotenzial angeschlossen wird und welcher zum Betrieb eines kapazitiven Sensors 15 der Baugruppe zum Erfassen eines Füllstands der Sammelkammer 4 dient. Dabei können auch weitere und insbesondere elektronische Komponenten für die Funktion des Sensors 15 in der Elektronikbaugruppe 3 angeordnet sein.

Die Schnittstelle 7 weist eine Aufnahme 18 mit einem Innengewinde für ein Befestigungsmittel 19 auf, bei welchem es sich um eine Schraube handelt. Gemäß einer hier nicht näher dargestellten Variante könnten auch passende Konfigurationselemente mit einer entsprechenden Kulisse in unterschiedlicher Ausrichtung an der Aufnahme 18 angeordnet werden, so dass wiederum unterschiedliche mechanische Konfigurationszustände an einer Struktur bereitgestellt werden könnten, welche ohnehin für die Befestigung der Baugruppe 2 an der Elektronikbaugruppe 3 erforderlich sind.

Die Elektronikbaugruppe 3 des Kondensatableiters 1 weist neben der bereits genannten Modulschnittstelle 8 eine Versorgungsanordnung 20 zur Erzeugung einer Versorgungsspannung auf. Bei dieser Versorgungsanordnung 20 handelt es sich vorliegend um einen Wandler. Diese Versorgungsspannung wird hier über die Modulschnittstelle 8 an die Polkontakte 16a, b für die elektrische Versorgung des Auslassventils 5 angelegt. Die Versorgungsanordnung 20 selbst wird wiederum durch einen Versorgungsanschluss 21 mit einer externen Spannungsquelle - welche hier nicht dargestellt ist - elektrisch verbunden. Diese externe Spannungsquelle stellt bevorzugt eine übliche Wechselspannung von 230 V bereit. Über den Versorgungsanschluss kann auch ein externer Massekontakt für den Sensorkontakt 17 bereitgestellt werden.

Wie in der Fig. 2 zu erkennen ist, kann auch die Modulschnittstelle 8 mechanisch unterschiedlich konfiguriert werden. Speziell weist die Modulschnittstelle 8 vier Aufnahmen auf, welche Gegen-Konfigurationspositionen 23a-d zu den Konfigurationspositionen 10a-d bilden und in denen jeweilige Gegen-Konfigurationselemente 22a, b aufgenommen werden können, bei welchen es sich hier ebenfalls um Schrauben handelt. Wie aus der Fig. 2 zu erkennen ist, grenzen die Gegen-Konfigurationspositionen 23a-d bei Befestigung der Baugruppe 2 an der Elektronikbaugruppe 3 unmittelbar an die Konfigurationspositionen 10a-d. Im Ausführungsbeispiel der Fig. 2 sind die Gegen-Konfigurationselemente 22a, b in den Gegen-Konfigurationspositionen 23c, d angeordnet. Die entsprechenden Schrauben, welche in den Gegen-Konfigurationspositionen 23c, d ebenfalls durch eine kraft- und formschlüssige Schraubverbindung angeordnet sind, ragen auch in die angrenzenden Konfigurationspositionen 10c, d hinein. Umgekehrt ragen auch die in den Konfigurationspositionen 10a, b angeordneten Schrauben in die Gegen-Konfigurationspositionen 23a, b hinein.

Daraus ist erkennbar, dass keine zwei Schrauben sowohl in einer der Konfigurationspositionen 10a-d als auch in der jeweils angrenzenden Gegen-Konfigurationsposition 23a-d angeordnet sein können, ohne mechanisch eine Befestigung der Baugruppe 2 an der Elektronikbaugruppe 3 zu blockieren. Eine geeignet komplementäre Anordnung der Schrauben ist also eine Voraussetzung für diese Befestigung, sodass eine Kodierung durch die Platzierung der Schrauben auf diese Weise mechanisch abgeprüft werden kann. Dabei ist denkbar, dass zusätzlich zu diesen mechanischen Eigenschaften die Schrauben auch eine elektrische Verbindung wie für die Kontaktelemente 13 beschrieben bereitstellen.

## Patentansprüche

1. Baugruppe (2) für einen Kondensatableiter (1) zum Ableiten eines Druckgaskondensats, wobei die Baugruppe eine Sammelkammer (4) zur Aufnahme des in einem Druckgassystem angefallenen Druckgaskondensats, ein elektrisch betriebenes Auslassventil (5) zur Abgabe des Druckgaskondensats aus der Sammelkammer (4), sowie eine Schnittstelle (7) zur Befestigung der Baugruppe (2) an einer Elektronikbaugruppe (3) aufweist, wobei die Schnittstelle (7) eine Kontaktanordnung (9) zur elektrischen Versorgung des Auslassventils (5) von der Elektronikbaugruppe (3) aufweist, **dadurch gekennzeichnet, dass** die Schnittstelle (7) in einen von mehreren möglichen und unterschiedlichen Konfigurationszuständen gebracht werden kann.

2. Baugruppe (2) nach Anspruch 1, **dadurch gekennzeichnet, dass** zumindest einige der möglichen Konfigurationszustände einem jeweiligen mechanischen Konfigurationszustand entspricht, vorzugsweise, dass die Schnittstelle (7) eine Vielzahl von beabstandeten Konfigurationspositionen (10a-d) aufweist, welche jeweils in eine von mehreren mechanischen Konfigurationsvarianten ausgeprägt sein können und dass jede unterschiedliche Konfigurationsvariante einer Konfigurationsposition (10a-d) einem unterschiedlichen Konfigurationszustand entspricht.

3. Baugruppe (2) nach Anspruch 2, **dadurch gekennzeichnet, dass** an zumindest einigen Konfigurationspositionen (10a-d) wahlweise ein jeweiliges Konfigurationselement (11a, b) angeordnet, vorzugsweise kraft- und/oder formschlüssig befestigt, werden kann, wobei das Vorhandensein eines Konfigurationselements (11a, b) an der jeweiligen Konfigurationsposition (10a-d) einer ersten Konfigurationsvariante der Konfigurationsposition (10a-d) und das Fehlen eines Konfigurationselements (11a, b) an der jeweiligen Konfigurationsposition (10a-d) einer zweiten Konfigurationsvariante der Konfigurationsposition (10a-d) entspricht.

4. Baugruppe (2) nach Anspruch 2 oder 3, **dadurch gekennzeichnet, dass** jeder Konfigurationszustand einem unterschiedlichen Oberflächenprofil der Schnittstelle (7) bei der Befestigung der Baugruppe (2) an der Elektronikbaugruppe (3) entspricht.

5. Baugruppe (2) nach einem der Ansprüche 2 bis 4, **dadurch gekennzeichnet, dass** an zumindest einigen Konfigurationspositionen (10a-d) ein jeweiliges Konfigurationselement (11a, b) in mehreren verschiedenen Anordnungsvarianten angeordnet werden kann, wobei jede Anordnungsvariante des Konfigurationselements (11a, b) an der jeweiligen Konfigurationsposition (10a-c) einer unterschiedlichen Konfigurationsvariante der Konfigurationsposition (10a-d) entspricht.

6. Baugruppe (2) nach Anspruch 5, **dadurch gekennzeichnet, dass** das jeweilige Konfigurationselement (11a, b) an der jeweiligen Konfigurationsposition (10a-d) in einer ersten und einer zweiten Anordnungsvariante angeordnet sein kann, wobei das jeweilige Konfigurationselement (11a, b) in der ersten Anordnungsvariante gegenüber der zweiten Anordnungsvariante in Richtung der Elektronikbaugruppe (3), insbesondere bezogen auf die Befestigung der Baugruppe (2) an der Elektronikbaugruppe (3), versetzt angeordnet ist.

7. Baugruppe (2) nach einem der Ansprüche 1 bis 6, **dadurch gekennzeichnet, dass** zumindest einige der möglichen Konfigurationszustände einem jeweiligen elektrischen Konfigurationszustand entsprechen und dass die Schnittstelle (7) einen Abfragekontakt zum Abfragen des elektrischen Konfigurationszustands der Schnittstelle (7) aufweist.

8. Baugruppe (2) nach Anspruch 7, **dadurch gekennzeichnet, dass** die Schnittstelle eine Vielzahl von Kontaktpositionen (12a-d) zur Anordnung von elektrischen Kontaktelementen (13) aufweist, und dass unterschiedliche Anordnungen der elektrischen Kontaktelemente (13) auf den Kontaktpositionen (12a-d) unterschiedlichen Konfigurationszuständen entsprechen, vorzugsweise, dass der Abfragekontakt zur elektrischen Verbindung mit den Kontaktelementen (13) eingerichtet ist, insbesondere, dass die elektrischen Kontaktelemente (13) den Abfragekontakt (14) bilden.

9. Baugruppe (2) nach Anspruch 8, **dadurch gekennzeichnet, dass** die Kontaktelemente (13) elektrisch leitfähige Stifte sind, dass die Kontaktpositionen (12a-d) Öffnungen zur wahlweisen Aufnahme der Stifte aufweisen und dass die Baugruppe zu jeder Kontaktposition (12a-d) einen Pol aufweist, welcher Pol so angeordnet ist, dass bei Aufnahme eines Stiftes durch eine Öffnung einer Kontaktposition (12a-d) der aufgenommene Stift in elektrischer Verbindung mit dem Pol der Kontaktposition (12a-d) steht.

10. Baugruppe (2) nach einem der Ansprüche 1 bis 9, **dadurch gekennzeichnet, dass** die Kontaktanordnung (9) zwei Polkontakte (16a, b) für die elektrische Versorgung des Auslassventils (5) aufweist, dass das Auslassventil (5) zum Betrieb durch eine Kleinspannung und die Polkontakte (16a, b) zum Anschluss an die Kleinspannung eingerichtet sind, vorzugsweise, wobei die Kleinspannung höchstens 120 V beträgt, insbesondere, wobei die Kleinspannung höchstens 50 V beträgt.

11. Baugruppe (2) nach einem der Ansprüche 1 bis 10, **dadurch gekennzeichnet, dass** die Baugruppe (2) einen insbesondere kapazitiven Sensor (15) zum Erfassen eines Füllstands der Sammelkammer (4) aufweist und dass die Kontaktanordnung (9) einen elektrischen Sensorkontakt (17) zum Betrieb des Sensors (15) aufweist, vorzugsweise, dass der Sensor (15) zum Betrieb mit einem Massepotenzial eingerichtet ist und der Sensorkontakt (17) zum Anschluss an ein Massepotenzial eingerichtet sind.

12. Baugruppe nach einem der Ansprüche 1 bis 11, **dadurch gekennzeichnet, dass** die Schnittstelle (7) eine Aufnahme (18) für ein Befestigungsmittel (19) aufweist, sodass durch das Befestigungsmittel eine kraftschlüssige Verbindung, vorzugsweise eine kraft- und formschlüssige Verbindung, zur Befestigung der Baugruppe (2) an der Elektronikbaugruppe (3) hergestellt werden kann und dass die Aufnahme (18), insbesondere durch Anordnung eines Konfigurationselements, in einen von mehreren möglichen mechanischen Konfigurationszuständen gebracht werden kann.

13. Kondensatableiter (1) zum Ableiten eines Druckgaskondensats mit einer Elektronikbaugruppe (3), welche Elektronikbaugruppe (3) eine Versorgungsanordnung (20) zur Erzeugung einer Versorgungsspannung, eine Modulschnittstelle (8) zur Befestigung einer Baugruppe (2) an der Elektronikbaugruppe (3) und zur Bereitstellung der Versorgungsspannung an der Baugruppe (2) und einen Versorgungsanschluss (21) zur Verbindung der Versorgungsanordnung (20) mit einer externen Spannungsquelle aufweist, **dadurch gekennzeichnet, dass** der Kondensatableiter (1) eine Baugruppe (2) nach einem der Ansprüche 1 bis 12 zur Befestigung an der Elektronikbaugruppe (3) aufweist.

14. Kondensatableiter (1) nach Anspruch 13, **dadurch gekennzeichnet, dass** die Modulschnittstelle (8) in eine von mehreren möglichen mechanischen Konfigurationen gebracht werden kann und dass bei zumindest einigen mechanischen Konfigurationen der Modulschnittstelle (8) und einigen der möglichen Konfigurationszustände der Schnittstelle (7), insbesondere bei einigen Anordnungsvarianten der Konfigurationselemente (11a, b), eine Befestigung der Baugruppe (2) an der Elektronikbaugruppe (3) mechanisch blockiert wird.

15. Kondensatableiter (1) nach Anspruch 13 oder 14, **dadurch gekennzeichnet, dass** die Elektronikbaugruppe (3) eine Logikvorrichtung zum Erfassen und Überprüfen eines Konfigurationszustands der Schnittstelle (7) aufweist, welche Logikvorrichtung in eine von mehreren möglichen elektrischen Konfigurationen gebracht werden kann, und dass die Logikvorrichtung bei einer fehlenden Übereinstimmung zwischen dem Konfigurationszustand der Schnittstelle (7) und der elektrischen Konfiguration der Logikvorrichtung eine Fehlerroutine zur Außerbetriebnahme der Baugruppe (2) ausführt, vorzugsweise, dass die Logikvorrichtung einen nichtflüchtigen Speicher zum Abspeichern der elektrischen Konfiguration aufweist.

## Claims

1. An assembly (2) for a condensate trap (1) for draining a compressed gas condensate, wherein the assembly has a collection chamber (4) for receiving the compressed gas condensate generated in a compressed gas system, an electrically operated outlet valve (5) for discharging the compressed gas condensate from the collection chamber (4), as well as an interface (7) for attaching the assembly (2) to an electronic assembly (3), wherein the interface (7) has a contact arrangement (9) for supplying the outlet valve with electricity (5) from the electronic assembly (3), **characterized in that** the interface (7) can be configured in one of a plurality of possible and different configuration states.

2. The assembly (2) according to Claim 1, **characterized in that** at least some of the possible configuration states correspond to respective mechanical configuration states, preferably that the interface (7) has a plurality of configuration positions (10a-d) located at a distance from each other, each of which can be assumed in one of a plurality of mechanical configuration variants, and that each different configuration variant of a configuration position (10a-d) corresponds to a different configuration state.

3. The assembly (2) according to Claim 2, **characterized in that** a respective configuration element (11a, b) can optionally be arranged in at least some configuration positions (10a-d), preferably be attached in a force-locking and/or form-locking manner, wherein the presence of a configuration element (11a, b) at the respective configuration position (10a-d) corresponds to a first configuration variant of the configuration position (10a-d) and the absence of a configuration element (11a, b) at the respective configuration position (10a-d) corresponds to a second configuration variant of the configuration position (10a-d).

4. The assembly (2) according to Claim 2 or 3, **characterized in that** each configuration state corresponds to a different surface profile of the interface (7) when attaching the assembly (2) to the electronic assembly (3).

5. The assembly (2) according to any one of Claims 2 to 4, **characterized in that**, in at least some configuration positions (10a-d), a respective configuration element (11a, b) can be arranged in a plurality of different arrangement variants, wherein each arrangement variant of the configuration element (11a, b) at the respective configuration position (10a-c) corresponds to a different configuration variant of the configuration position (10a-d).

6. The assembly (2) according to Claim 5, **characterized in that** the respective configuration element (11a, b) can be arranged in a first and a second arrangement variant at the respective configuration position (10a-d), wherein the respective configuration element (11a, b) in the first arrangement variant is arranged offset in the direction of the electronic assembly (3) compared to the second arrangement variant, in particular with regard to the attachment of the assembly (2) to the electronic assembly (3).

7. The assembly (2) according to any one of Claims 1 to 6, **characterized in that** at least some of the possible configuration states correspond to a respective electrical configuration state and that the interface (7) has a detection contact for detecting the configuration state of the interface (7).

8. The assembly (2) according to Claim 7, **characterized in that** the interface has a plurality of contact positions (12a-d) for arranging electrical contact elements (13), and that different arrangements of the electrical contact elements (13) on the contact positions (12a-d) correspond to different configuration states, preferably that the detection contact is designed for establishing an electrical connection with the contact elements (13), in particular that the electrical contact elements (13) form the detection contact (14).

9. The assembly (2) according to Claim 8, **characterized in that** the contact elements (13) are electrically conductive pins, that the contact positions (12a-d) have openings for optionally receiving the pins, and that the assembly has a pole at each contact position (12a-d), which pole is arranged such that, when a pin is received by opening a contact position (12a-d), the received pin is electrically connected with the pole of the contact position (12a-d).

10. The assembly (2) according to any one of Claims 1 to 9, **characterized in that** the contact arrangement (9) has two pole contacts (16a, b) for supplying the outlet valve (5) with electricity, that the outlet valve (5) is designed for operating at a low voltage and that the pole contacts (16a, b) preferably are designed for connecting to the low voltage, wherein the low voltage is no higher than 120 V, in particular, wherein the low voltage is no higher than 50 V.

11. The assembly (2) according to any one of Claims 1 to 10, **characterized in that** the assembly (2) specifically has a capacitive sensor (15) for detecting a fill level of the collection chamber (4) and that the contact arrangement (9) has an electrical sensor contact (17) for operating the sensor (15), preferably that the sensor (15) is designed for operating with a ground potential and the sensor contact (17) is designed for connecting to a ground potential.

12. The assembly according to any one of Claims 1 to 11, **characterized in that** the interface (7) has a holder (18) for a fastener (19) such that a force-locking connection, preferably a force-locking and form-locking connection, can be established by the fastener for attaching the assembly (2) to the electronic assembly (3), and that the holder (18) can be configured in one of several possible mechanical configuration states, in particular by arranging a configuration element.

13. A condensate trap (1) for draining a compressed gas condensate, having an electronic assembly (3), which electronic assembly (3) has a supply arrangement (20) for generating a supply voltage, a module interface (8) for attaching an assembly (2) to the electronics module (3) and for providing the supply voltage at the assembly (2), and a supply connector (21) for connecting the supply arrangement (20) to an external voltage source, **characterized in that** the condensate trap (1) has an assembly (2) according to any one of claims 1 to 12 for attaching to the electronic assembly (3).

14. The condensate trap (1) according to Claim 13, **characterized in that** the module interface (8) can be configured in one of a plurality of possible mechanical configurations and that in at least some mechanical configurations of the module interface (8) and in some of the possible configuration states of the interface (7), in particular in some arrangement variants of the configuration elements (11a, b), an attachment of the assembly (2) to the electronic assembly (3) is blocked mechanically.

15. The condensate trap (1) according to Claim 13 or 14, **characterized in that** the electronic assembly (3) has a logic device for detecting and reviewing a configuration state of the interface (7), which logic device can be configured in one of a plurality of possible electrical configurations, and that the logic device executes an error routine for shutting down the assembly (2) in the event of a missing match between the configuration state of the interface (7) and the electrical configuration of the logic device, preferably, that the logic device has a non-volatile memory for storing the electrical configuration.

## Revendications

1. Module (2) pour un dispositif d'évacuation de condensat (1) destiné à évacuer un condensat de gaz comprimé, dans lequel ledit module comprend une chambre collectrice (4) pour recevoir le condensat de gaz comprimé produit dans un système de gaz comprimé, une soupape d'échappement (5) à commande électrique pour faire sortir le condensat de gaz comprimé de la chambre collectrice (4), ainsi qu'une interface (7) de fixation du module (2) à un module électronique (3), dans lequel l'interface (7) présente un ensemble de contact (9) pour l'alimentation électrique de la soupape d'échappement (5) à partir du module électronique (3), **caractérisé par le fait que** l'interface (7) peut être amenée dans l'un de plusieurs états de configuration possibles et différents.

2. Module (2) selon la revendication 1, **caractérisé par le fait qu'**au moins certains des états de configuration possibles correspondent à un état de configuration mécanique respectif, de préférence que l'interface (7) présente une pluralité de positions de configuration (10a-d) espacées qui peuvent être prononcées chacune dans l'une de plusieurs variantes de configuration mécaniques, et que chaque variante de configuration différente d'une position de configuration (10ad) correspond à un état de configuration différent.

3. Module (2) selon la revendication 2, **caractérisé par le fait que**, au choix, un élément de configuration (11a, b) respectif peut être disposé, de préférence fixé par adhérence et/ou à engagement positif, sur au moins certaines positions de configuration (10a-d), dans lequel la présence d'un élément de configuration (11a, b) sur la position de configuration (10a-d) respective correspond à une première variante de configuration de la position de configuration (10a-d) et l'absence d'un élément de configuration (11a, b) sur la position de configuration (10a-d) respective correspond à une deuxième variante de configuration de la position de configuration (10a-d).

4. Module (2) selon la revendication 2 ou 3, **caractérisé par le fait que** chaque état de configuration correspond à un profil de surface différent de l'interface (7) lors de la fixation du module (2) au module électronique (3).

5. Module (2) selon l'une quelconque des revendications 2 à 4, **caractérisé par le fait que**, sur au moins certaines positions de configuration (10a-d), un élément de configuration (11a, b) respectif peut être disposé dans plusieurs variantes de disposition différentes, dans lequel chaque variante de disposition de l'élément de configuration (11a, b) sur la position de configuration (10a-c) respective correspond à une variante de configuration différente de la position de configuration (10a-d).

6. Module (2) selon la revendication 5, **caractérisé par le fait que** l'élément de configuration (11a, b) respectif sur la position de configuration (10a-d) respective peut être disposé dans une première et une deuxième variante de disposition, dans lequel l'élément de configuration (11a, b) respectif dans la première variante de disposition est disposé de manière décalée par rapport à la deuxième variante de disposition en direction du module électronique (3), en particulier en ce qui concerne la fixation du module (2) au module électronique (3).

7. Module (2) selon l'une quelconque des revendications 1 à 6, **caractérisé par le fait qu'**au moins certains des états de configuration possibles correspondent à un état de configuration électrique respectif et que l'interface (7) présente un contact d'interrogation pour interroger l'état de configuration électrique de l'interface (7).

8. Module (2) selon la revendication 7, **caractérisé par le fait que** l'interface présente une pluralité de positions de contact (12a-d) pour la disposition d'éléments de contact électrique (13), et que différentes dispositions des éléments de contact électrique (13) sur les positions de contact (12a-d) correspondent à différents états de configuration, de préférence que le contact d'interrogation est configuré pour la connexion électrique aux éléments de contact (13), en particulier que les éléments de contact électrique (13) forment le contact d'interrogation (14).

9. Module (2) selon la revendication 8, **caractérisé par le fait que** les éléments de contact (13) sont des broches électriquement conductrices, que les positions de contact (12a-d) présentent des ouvertures pour recevoir au choix les broches et que le module présente un pôle pour chaque position de contact (12a-d), lequel pôle est disposé de telle sorte que, lorsqu'une broche est reçue à travers une ouverture d'une position de contact (12a-d), la broche reçue est en communication électrique avec le pôle de la position de contact (12a-d).

10. Module (2) selon l'une quelconque des revendications 1 à 9, **caractérisé par le fait que** ledit ensemble de contact (9) présente deux contacts de pôle (16a, b) pour l'alimentation électrique de la soupape d'échappement (5), que la soupape d'échappement (5) est configurée pour fonctionner par une très basse tension et les contacts de pôle (16a, b) sont configurés pour être connectés à la très basse tension, de préférence dans lequel la très basse tension est de 120 V tout au plus, en particulier dans lequel la très basse tension est de 50 V tout au plus.

11. Module (2) selon l'une quelconque des revendications 1 à 10, **caractérisé par le fait que** le module (2) présente un capteur (15) en particulier capacitif pour détecter un niveau de remplissage de la chambre collectrice (4) et que l'ensemble de contact (9) comprend un contact de capteur électrique (17) pour faire fonctionner le capteur (15), de préférence que le capteur (15) est configuré pour fonctionner avec un potentiel de masse et le contact de capteur (17) est configuré pour être connecté à un potentiel de masse.

12. Module selon l'une quelconque des revendications 1 à 11, **caractérisé par le fait que** l'interface (7) présente un logement (18) pour un moyen de fixation (19) de sorte que le moyen de fixation permet d'établir une liaison par adhérence, de préférence une liaison par adhérence et à engagement positif, pour fixer le module (2) au module électronique (3), et que ledit logement (18) peut être amené dans l'un de plusieurs états de configuration mécaniques possibles, en particulier en disposant un élément de configuration.

13. Dispositif d'évacuation de condensat (1) destiné à évacuer un condensat de gaz comprimé, comprenant un module électronique (3), lequel module électronique (3) présente un ensemble d'alimentation (20) pour générer une tension d'alimentation, une interface de module (8) pour fixer un module (2) au module électronique (3) et pour fournir la tension d'alimentation sur le module (2), ainsi qu'un raccord d'alimentation (21) pour connecter l'ensemble d'alimentation (20) à une source de tension externe, **caractérisé par le fait que** le dispositif d'évacuation de condensat (1) comprend un module (2) selon l'une quelconque des revendications 1 à 12 pour la fixation au module électronique (3).

14. Dispositif d'évacuation de condensat (1) selon la revendication 13, **caractérisé par le fait que** l'interface de module (8) peut être amenée dans l'une de plusieurs configurations mécaniques possibles et que dans au moins certaines configurations mécaniques de l'interface de module (8) et dans certains des états de configuration possibles de l'interface (7), en particulier dans certaines variantes de disposition des éléments de configuration (11a, b), une fixation du module (2) sur l'ensemble électronique (3) est bloquée mécaniquement.

15. Dispositif d'évacuation de condensat (1) selon la revendication 13 ou 14, **caractérisé par le fait que** le module électronique (3) comprend un dispositif logique pour détecter et vérifier un état de configuration de l'interface (7), lequel dispositif logique peut être amené dans l'une de plusieurs configurations électriques possibles, et que le dispositif logique exécute une routine de défaut pour mettre hors service le module (2) en cas de non-concordance entre l'état de configuration de l'interface (7) et la configuration électrique du dispositif logique, de préférence que le dispositif logique présente une mémoire non volatile pour stocker la configuration électrique.
